**Europäisches Patentamt**

**European Patent Office**

**Office européen des brevets**

(11) Numéro de publication: **0 237 408 B1**

(12) **FASCICULE DE BREVET EUROPEEN**

(45) Date de publication de fascicule du brevet: **19.02.92** (51) Int. Cl.⁵: **H04L 7/02**

(21) Numéro de dépôt: **87400443.5**

(22) Date de dépôt: **27.02.87**

(54) **Procédé et dispositif de récupération d'horloge asynchrone pour système de transmission numérique.**

(30) Priorité: **27.02.86 FR 8602724**

(43) Date de publication de la demande:
**16.09.87 Bulletin 87/38**

(45) Mention de la délivrance du brevet:
**19.02.92 Bulletin 92/08**

(84) Etats contractants désignés:
**DE GB NL SE**

(56) Documents cités:
**DE-A- 2 324 853**
**DE-C- 3 431 419**
**FR-A- 2 568 738**
**GB-A- 2 091 961**
**US-A- 4 371 975**

(73) Titulaire: **FRANCE TELECOM**
**6 place d'Alleray**
**F-75015 Paris(FR)**

Titulaire: **TELEDIFFUSION DE FRANCE**
**10, rue d'Oradour sur Glane**
**F-75932 Paris Cédex 15(FR)**

(72) Inventeur: **Alard, Michel**
**3, Passage du Louis d'Or**
**F-35000 Rennes(FR)**

(74) Mandataire: **Fort, Jacques**
**CABINET PLASSERAUD 84, rue d'Amsterdam**
**F-75009 Paris(FR)**

## Description

L'invention concerne la récupération d'horloge asynchrone dans un signal de donnée numérique binaire et elle est utilisable dans tous les systèmes de transmission numérique. Elle trouve cependant une application particulièrement importante dans les systèmes où la transmission s'effectue non pas de façon continue, mais par salves périodiques, les salves successives conservant la même synchronisation.

A titre d'exemple de systèmes de transmission où les données apparaissent par salves, on peut citer la radiodiffusion par satellite et la radiodiffusion terrestre aux normes MAC-PAQUETS, qui mettent en oeuvre un multiplexage temporel des données pendant les intervalles de suppression ligne d'un signal télévision. Du fait que les salves numériques ont une durée qui n'est qu'environ le sixième de la durée totale de la ligne, la récupération d'horloge est toujours délicate à effectuer. C'est en particulier le cas lorsque les données sont transmises en duobinaire. Une contrainte supplémentaire est constituée par le fait qu'il est souhaitable que le dispositif ne comporte que des éléments aisément intégrables, étant donné qu'il est du type "grand public", n'exige pas de réglage, et soit compatible avec plusieurs débits de données. Dans le cas par exemple du MAC-PAQUETS, le débit numérique instantané peut passer du simple au double. Il sera de 10,125 Mb/s pour le D2 et 20,25 Mb/s pour le D.

Ces contraintes rendent peu attrayants les dispositifs de récupération d'horloge qui utilisent un traitement non linéaire constitué par : le produit du signal de donnée et du même signal retardé d'une demi-période à l'aide d'une ligne à retard pour faire apparaître une raie dans le spectre de fréquence d'horloge ; le filtrage analogique à cette fréquence pour isoler la raie ; puis l'asservissement d'un oscillateur local à l'aide d'une boucle à verrouillage de phase à bande étroite dont l'entrée est constituée par le filtre d'isolement de la raie, accordé sur la fréquence d'horloge, permettant de reconstituer les transitions manquantes. Ces dispositifs sont en effet difficiles à réaliser sous forme de circuits intégrés, en raison notamment de la présence d'un filtre LC et d'une ligne à retard.

On connaît par ailleurs déjà un procédé de récupération d'horloge asynchrone dans un signal de donnée numérique binaire suivant lequel on applique le signal d'un oscillateur local commandé par tension (constituant horloge locale) et le signal de donnée à un circuit sensible aux transitions desdits signaux et on commande la fréquence de l'oscillateur à partir d'une tension analogique élaborée à partir de la sortie du circuit. Suivant ce procédé connu, dont on pourra trouver une description dans l'article de C. Ross et Coll. dans "IEEE Trans. Comm." Com. 30, octobre 1982,, le circuit est tel que son signal de sortie passe à 1 à chaque transition du signal de donnée et s'inverse par rapport à son état précédent à chaque front montant du signal de l'oscillateur local d'horloge. Ce procédé ne permet pas de réaliser un circuit facilement intégrable, car il est basé sur une dérivation logique du signal et il soulève des problèmes de contrôle de largeur d'impulsion, surtout pour les débits élevés ; il a de plus l'inconvénient de ne prendre en compte que les transitions de données qui interviennent alors que le niveau de sortie du circuit est à zéro. Cette condition n'existe qu'avec une probabilité de 75%. L'estimation de la phase du signal d'horloge fourni par l'oscillateur est donc dégradée. Lorsque l'horloge doit être récupérée à partir d'un nombre limité de transitions dans chaque salve, la dégradation est extrêmement appréciable et diminue l'immunité au bruit : c'est en particulier le cas lorsque le signal de donnée est à la norme D2-MAC-PAQUETS.

A titre d'exemple de documents décrivant un circuit exigeant une dérivation on peut citer le brevet FR 2 568 738. On connaît également un dispositif de récupération d'horloge conforme au préambule de la revendication 3 qui n'utilise que les transitions montantes (brevet US 4 371 975).

L'invention vise notamment à fournir un procédé du genre ci-dessus défini répondant mieux que ceux antérieurement connus aux exigences de la pratique, notamment en ce qu'il prend en compte la totalité des transitions de données, est aisément intégrable et présente une grande souplesse d'utilisation. Dans ce but, l'invention propose notamment un procédé dans lequel on applique directement et sans dérivation, les signaux en circuit ; on fait passer la sortie ($\overline{A}$) dudit circuit à 1 à chaque front montant d'horloge et on la ramène à 0 à chaque transition de données. La valeur moyenne du signal de sortie et du signal complémentaire donne donc une estimation du retard moyen des transitions de donnée par rapport aux fronts montants du signal d'horloge fourni par l'oscillateur local.

Il semble à première vue que cette approche présente un défaut rédhibitoire qui tend à la faire rejeter par le spécialiste : en l'absence de transition de données, le signal de sortie reste à 1, ce qui correspond à un biais systématique. Mais ce biais est aisément compensé en détectant l'absence de transition et en générant une tension de correction correspondante. Dans la pratique, la tension de correction pourra être générée en échantillonnant le signal de sortie à l'aide du signal d'horloge. En effet, toute absence de transition dans le cycle d'horloge précédant l'échantillonnage correspond à une valeur $\overline{B} = 1$ ($\overline{B}$ désignant un échantillon de sortie). La valeur moyenne de $(A + O) - (\overline{A} + \overline{B})$

constitue une estimation de la valeur de correction.

L'invention propose également un dispositif conforme à la revendication 3 permettant de mettre en oeuvre le procédé ci-dessus défini. On voit que le procédé et le dispositif sont utilisables pour des systèmes à débit variable (dans la pratique à des débits allant de O jusqu'à une valeur élevée, par exemple 140 Mb/s), ont de bonnes performances d'immunité au bruit, même dans le cas de transmission par salves du fait qu'ils prennent en compte toutes les transitions de données; et le dispositif est facilement intégrable.

L'invention sera mieux comprise à la lecture de la description qui suit d'un mode particulier de réalisation donné à titre d'exemple non limitatif et de la comparaison qui en est faite avec un dispositif suivant l'art antérieur. La description se réfère aux dessins qui l'accompagnent, dans lesquels :

- la Figure 1 est un schéma de principe d'un dispositif de type connu de récupération d'horloge,
- la Figure 2 représente un dispositif de récupération d'horloge suivant un mode de réalisation de l'invention,
- la Figure 3 est un chronogramme montrant un exemple de signaux susceptibles d'apparaître en divers points du circuit de la Figure 2,
- la Figure 4 est un schéma de principe montrant une constitution possible, en technologie hybride, du dispositif de la Figure 2.
- la Figure 5 est un shcéma montrant l'allure de la variation du signal d'erreur en fonction du déphasage.

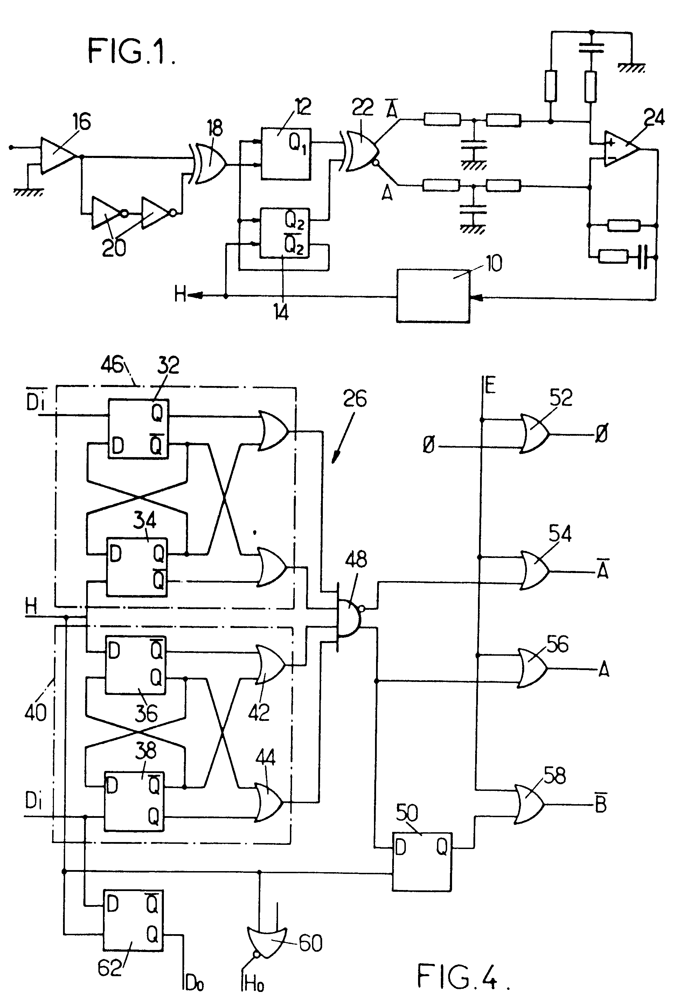

Le dispositif représenté en Figure 1 comporte une boucle à verrouillage de phase contenant un oscillateur 10 à commande par tension qui fournit la fréquence d'horloge récupérée H. Le signal d'horloge fourni par cet oscillateur 10 est comparé aux transitions du signal de donnée dans un jeu de deux bascules 12 et 14. Les transitions elles-mêmes sont obtenues à l'aide d'un montage qui comporte un comparateur 16 à seuil de référence (permettant de disposer de données binaires) et une porte OU EXCLUSIF 18. Cette porte reçoit, sur une entrée, directement le signal de sortie du comparateur 16 et, sur l'autre entrée, le signal de sortie retardé par des moyens qui, sur la Figure 1, sont constitués de deux portes inverseuses 20 en série.

Le signal de sortie de la porte OU EXCLUSIF 18, constitué par les transitions de données, est appliqué à l'entrée d'horloge de la bascule 12. L'entrée de données de cette bascule reçoit la sortie $\overline{Q}2$ de la bascule 14, sortie qui est également ré-appliquée sur l'entrée de données de la bascule 14. L'entrée d'horloge de cette bascule 14 reçoit le signal de sortie de l'oscillateur 10 commandé en tension.

Les sorties Q1 et Q2 des bascules 12 et 14 sont appliquées sur les deux entrées d'une seconde porte OU EXCLUSIF 22. Par des circuits résistance-capacité, deux sorties complémentaires A et $\overline{A}$ de la porte 22 attaquent les deux entrées d'un amplificateur différentiel 24 qui fournit le signal d'erreur commandant l'oscillateur 10.

On voit que chaque front montant du signal d'horloge fourni par l'oscillateur 10 inverse la sortie Q2 par rapport à sa valeur précédente. On voit aussi qu'une transition de données, appliquée sur l'entrée d'horloge de la bascule 12, va faire passer la sortie de la porte 22 à 1 si elle n'était pas déjà à 1.

En conséquence, chaque transition de données qui intervient alors que le signal de sortie A de la porte 22 est à O, fait passer cette sortie à 1. Le front montant d'horloge suivant ramène la sortie A à O. La largeur de l'impulsion sur la sortie A constitue une estimation de la phase de l'horloge locale par rapport aux données.

Et puisque la sortie A s'inverse au rythme de l'horloge lorsqu'il n'y a pas de transition de données et se traduit alors par une valeur moyenne de A qui est nulle, la valeur moyenne du signal de sortie de l'amplificateur différentiel 24 constitue une estimation du déphasage de l'horloge locale par rapport aux données et permet de commander l'oscillateur 10.

Comme on l'a déjà indiqué plus haut, le dispositif de la Figure 1 présente l'inconvénient de ne pas prendre en compte la totalité des transitions de données. En effet, une transition ne provoque la venue à 1 de la sortie A que si cette sortie était antérieurement à O. Cette situation ne se produit que dans deux cas :

- il y a eu une transition de données au cours de la période correspondant à l'élément binaire ou "bit" précédent,
- il y a eu un nombre pair de périodes affectées à des éléments binaires sans transition depuis la dernière transition de données.

La probabilité que l'une ou l'autre de ces situations se présente n'est que de 75%, ce qui réduit les performances du dispositif et le dégrade de façon particulièrement notable lorsque l'horloge doit être récupérée à partir d'un nombre limité de transitions.

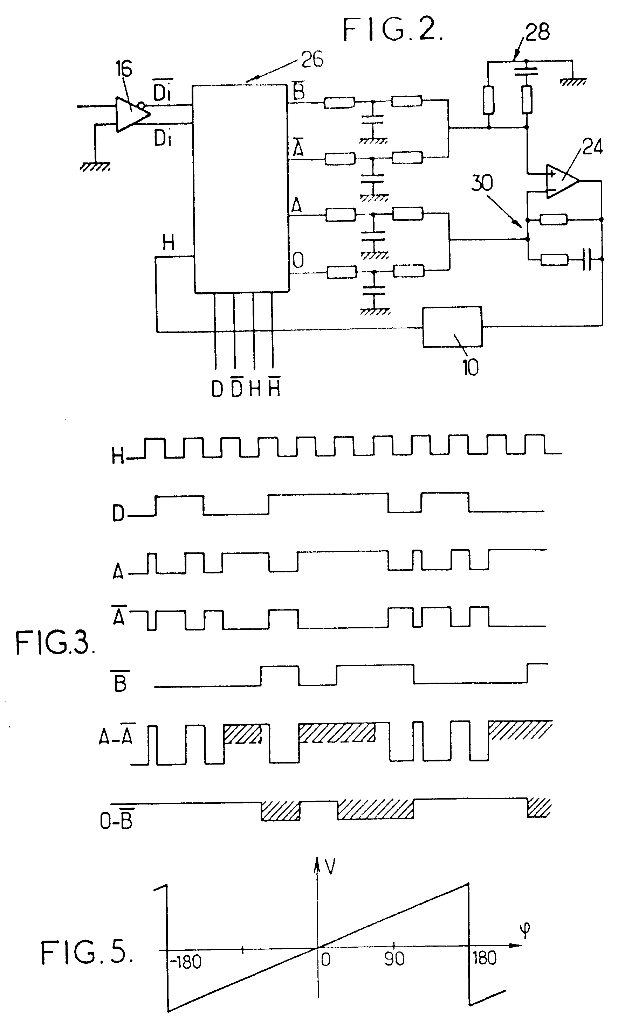

Cet inconvénient est écarté dans le cas du dispositif suivant l'invention présentant la constitution générale montrée en Figure 2.

On retrouve, dans le circuit de la Figure 2, une boucle à verrouillage de phase comportant un oscillateur 10 commandé en tension et un comparateur à seuil 16 permettant d'obtenir la donnée binaire Di et le complément $\overline{D}i$. Le signal d'horloge locale H fourni par l'oscillateur 10 est appliqué, ainsi que le signal d'entrée, à un comparateur de phase 26 réalisé de façon à obtenir un chronogramme du genre dont un exemple est montré en Figure 3 :

- la sortie A du comparateur 26 passe à 1 (ou reste à 1) sur chaque front montant du signal d'horloge H,
- la sortie A est ramenée à O (ou reste à O) à chaque transition de la donnée Di.

La valeur moyenne du signal A-$\overline{A}$ donne donc, dans le cas de la Figure 1, une estimation du retard moyen des transitions de données par rapport aux fronts montants de l'horloge. Mais si on appliquait directement A et $\overline{A}$ aux entrées d'un amplificateur différentiel 24, comme dans le cas de la Figure 1, il y aurait un biais systématique. En effet, le signal de sortie A reste à 1 en l'absence de transition de données.

Plusieurs solutions peuvent être utilisées pour compenser ce biais. Le chronogramme de la Figure 3 montre comment il peut être rattrapé en détectant l'absence de transition par échantillonnage du signal A à l'aide de l'horloge. Le comparateur de phase 26 (Figure 2) peut comporter une sortie supplémentaire $\overline{B}$ dont le passage à 1 indique qu'il n'y a pas eu de transition de données au cours du cycle d'horloge correspondant.

Si on appelle alors O le niveau logique correspondant à l'état O, on constate immédiatement que la valeur moyenne de :

$$(A + O) - (\overline{A} + \overline{B})$$

correspond à l'estimation recherchée.

La valeur estimée peut alors être obtenue en appliquant la valeur moyenne de A + O sur l'une des entrées de l'amplificateur différentiel 24, celle de $\overline{A} + \overline{B}$ sur l'autre entrée. Dans le cas montré en Figure 2, chacune des valeurs moyennes est déterminée à partir de la sortie correspondante à l'aide d'un réseau résistance-capacité du même type que celui utilisé dans le cas de la Figure 1. Les biais et les tensions de compensation sont représentés schématiquement par les zones en hachures sur les lignes A-$\overline{A}$ et $\overline{O}$-$\overline{B}$ de la Figure 3.

Le dispositif de la Figure 2 comporte, comme celui de la Figure 1, des réseaux RC supplémentaires destinés à constituer une boucle à verrouillage de phase du second ordre. Ces réseaux 28 et 30 peuvent être omis pour constituer une boucle du premier ordre.

Le comparateur de phase, fournissant A, $\overline{A}$ et $\overline{B}$, peut avoir notamment la constitution montrée en Figure 4.

Le comparateur montré en Figure 4 comporte une partie séquentielle constituée de quatre bascules 32, 34, 36 et 38. Ces bascules peuvent par exemple, dans un circuit à composants discrets, être de type MC 10H 131. Les signaux de données Di et $\overline{D}i$ sont appliqués sur les entrées d'horloge des bascules 38 et 32, respectivement. Une première branche 40 comprend, en plus des bascules 36 et 38, deux portes OU 42 et 44. L'une des entrées de la porte 42 reçoit la sortie $\overline{Q}$ de la bascule 36 et son autre entrée reçoit la sortie $\overline{Q}$ de la bascule 38, sortie également reliée à l'entrée d'horloge de la bascule 36. Le montage de la bascule 38 et de la porte 44 est symétrique du précédent. La seconde branche 46 présente la même constitution que la branche 44.

Les sorties de toutes les portes OU des branches 40 et 46 sont appliquées à une porte ET 48 qui fournit deux signaux complémentaires. La sortie de la porte ET est appliquée à l'entrée de données d'une bascule 50 dont la sortie Q fournit un signal d'échantillonnage. L'entrée d'horloge de la bascule 50 reçoit directement le signal d'horloge locale récupéré. Quatre portes OU 52, 54, 56 et 58 sont prévues pour récupérer respectivement les signaux O, A, A et B. Chacune reçoit, sur une entrée, un signal d'échantillonnage E maintenu au niveau zéro pendant la durée des salves. La seconde entrée de chaque porte reçoit :

- le niveau O pour la porte 52,
- la sortie complémentée de la porte 48 pour la porte 54,
- la sortie non complémentée de la porte 48 pour la porte 56,
- la sortie Q de la bascule 50 pour la porte 58.

Les quatre sorties O, $\overline{A}$, A et $\overline{B}$ ainsi obtenues sont combinées dans un réseau résistance-capacité qui peut être celui montré en Figure 2.

Enfin, une ou plusieurs portes 60 peuvent être utilisées pour récupérer le signal d'horloge en sortie Ho. Quant au signal de donnée de sortie, il est obtenu, en synchronisme avec le signal d'horloge, à l'aide d'une bascule supplémentaire 62 dont l'entrée de données reçoit le signal Di et l'entrée d'horloge reçoit le signal d'horloge locale H.

Le montage qui a été représenté correspond au cas d'un oscillateur commandé en tension dont la fréquence de sortie augmente avec la tension de commande qui lui est appliquée. Le montage est également applicable au cas d'un oscillateur ayant une caractéristique inverse, à condition d'inverser les polarités du comparateur 24.

Le fonctionnement du dispositif ressort directement de la description qui précède : les quatre bascules 32, 34, 36 et 38 étant directement rebouclées sur elles-mêmes, leur rapidité de fonctionnement est maximale. En effet, la logique combinatoire qui suit ces bascules ne limite en rien la vitesse de fonctionnement du circuit, car seule la valeur moyenne des signaux de sortie O, $\overline{A}$, A et $\overline{B}$ joue un rôle dans le fonctionnement du système.

A chaque front montant de l'horloge, les bascules 34 et 36 reproduisent la sortie $\overline{Q}$ des bas-

cules correspondantes 32 et 38. Les quatre portes OU 42 et 44 passent à 1 ainsi que la sortie A. Sur un front de données, l'une des bascules 32 et 38 reproduit sur sa sortie la sortie Q de la bascule correspondante 34 et 36. L'une des sorties de portes OU passe alors à O ainsi que la sortie A.

Un tel dispositif est réalisable en technologie ECL sous forme hybride et permet sans difficulté de récupérer un signal d'horloge jusqu'à une cadence de 140 Mbits/s environ. On choisira une boucle à verrouillage de phase du premier ou du second ordre selon la bande de bruit acceptable et la plage d'acquisition souhaitée.

On voit que l'invention utilise les transitions de façon optimale, puisque toutes sont prises en compte dans l'élaboration du signal d'erreur. Au surplus, cette tension d'erreur est une fonction croissante du déphasage sur toute la plage allant de $- 180°$ à $+ 180°$. La figure 5, qui peut être considérée comme ce que serait la sortie de l'amplificateur 24 en l'absence d'un condensateur d'intégration et après ouverture de la boucle de verrouillage, montre que la tension de sortie a une valeur absolue maximale à $- 180°$, s'annule à $0°$ et prend de nouveau une valeur maximale à $+ 180°$. La pente de la caractéristique tension de sortie V-déphasage $\phi$ dépend du nombre de transitions mais dans tous les cas une utilisation optimale des transitions disponibles est faite.

## Revendications

1. Procédé de récupération d'horloge asynchrone dans un signal de donnée numérique binaire suivant lequel on applique le signal d'un oscillateur local commandé par tension constituant horloge locale et le signal de donnée à un circuit sensible aux transitions desdits signaux et on commande la fréquence de l'oscillateur à partir d'une tension analogique élaborée à partir de la sortie dudit circuit, caractérisé en ce qu'on applique, directement et sans dérivation, lesdits signaux audit circuit ; on fait passer ou on maintient la sortie ($\overline{A}$) dudit circuit à 1 à chaque front montant d'horloge et on la ramène à 0 à chaque transition de données, la valeur moyenne du signal de sortie et du signal complémentaire donnant une estimation du retard moyen des transitions de donnée par rapport aux fronts montants du signal d'horloge fourni par l'oscillateur local ; et en ce qu on détecte toute absence de transition au cours d'une période correspondant à un élément binaire du signal de donnée d'entrée (Di) pour générer une tension de correction combinée à la dite valeur moyenne.

2. Procédé selon la revendication 1, caractérisé en ce qu'on génère la tension de correction en échantillonnant le signal de sortie à l'aide du signal d'horloge (H) et en ce que l'on commande l'oscillateur local par la valeur moyenne de $(A + O) - (\overline{A} + \overline{B})$, $\overline{B}$ représentant l'échantillon du signal de sortie.

3. Dispositif de récupération d'horloge asynchrone (H) dans un signal de donnée numérique binaire (Di et $\overline{Di}$) comprenant deux circuits (40 et 46) montés de façon à recevoir respectivement les signaux de données et d'horloge locale sans dérivation et sensibles aux transitions de ces signaux et une boucle à verrouillage de phase ayant un oscillateur local (10) commandé par tension et fournissant l'horloge locale et un circuit de correction, dont la sortie est reliée à l'entrée de commande de l'oscillateur local, le circuit sensible aux transitions étant constitué de façon que sa sortie (A) passe à 1 à chaque front montant d'horloge et revienne à 0 à chaque transition de données, caractérisé en ce que le circuit sensible aux transitions comprend :

   - un premier jeu de bascules (32-34) dont l'une (32) reçoit le signal de données complémenté ($\overline{Di}$) sur son entrée d'horloge, tandis que l'autre bascule (34) reçoit la sortie $\overline{Q}$ de la première bascule (32) sur son entrée de données,

   - un second jeu de bascules (36-38) dont l'une (38) reçoit le signal de données (Di) non complémenté sur son entrée d'horloge, tandis que l'autre bascule (36) reçoit la sortie $\overline{Q}$ de la première bascule (38) sur son entrée de données, et

   - une logique combinatoire (42, 44, 48) comportant quatre portes OU dont chacune reçoit sur ses deux entrées les sorties correspondantes des deux bascules (32, 34 ou 36, 38) du jeu associé et une porte ET (48) recevant la sortie de toutes les portes OU.

4. Dispositif selon la revendication 3, caractérisé en ce que le circuit de correction a un réseau de formation de valeur moyenne.

5. Dispositif selon la revendication 4, caractérisé en ce que le circuit de formation de la valeur moyenne comporte un amplificateur différentiel (24).

6. Dispositif selon la revendication 5, caractérisé en ce que ledit circuit (26) comporte des moyens (32-38) d'échantillonnage du signal de sortie à l'aide du signal d'horloge (H) et en ce que le réseau est monté de façon à former la valeur moyenne de $(A + O)$ - $(\overline{A} + \overline{B})$, $\overline{B}$ désignant l'échantillon du signal de sortie.

7. Dispositif selon la revendication 3, caractérisé en ce que le circuit sensible aux transitions comprend une bascule supplémentaire (50) recevant le signal de sortie (A) de la porte ET sur son entrée de données et le signal d'horloge locale sur son entrée locale pour fournir en sortie des échantillons dudit signal de sortie.

8. Dispositif selon l'une quelconque des revendications 3 à 7 caractérisé en ce qu'il comprend une bascule (62) montée pour recevoir le signal de donnée sur son entrée de données et le signal d'horloge locale sur son entrée d'horloge, fournissant le signal de donnée de sortie.

**Claims**

1. A method for recovery of an asynchronous clock from a binary digital data signal, wherein the signal of a voltage controlled local oscillator forming a local clock and the data signal are applied to a circuit responsive to the transitions of said signals and the frequency of the oscillator is controlled with an analog voltage generated from the output of the circuit,

characterized by the steps of: applying, directly and without derivation, said signals to said circuit; causing the output $(\overline{A})$ of said circuit to pass to 1 or to be maintained at 1 responsive to each up-going clock edge and bringing back it to 0 responsive to each data transition, the mean value of the output signal and of the complementary signal providing an estimation of the average delay of the data transitions with respect to the up-going edges of the clock signal delivered by the local oscillator; and detecting any absence of transition during a period corresponding to one bit of the input data signal (Di) for generating a correction voltage combined to said average value.

2. Method according to claim 1,

characterized in that the correction voltage is generated by sampling the output signal with the clock signal (H) and in that the local oscillator is controlled with the mean value of $(A + O)$ - $(\overline{A} + \overline{B})$, $\overline{B}$ representing the sample of the output signal.

3. Device for recovery of the asynchronous clock (H) in a binary digital data signal (Di and $\overline{Di}$) comprising two circuits (40 and 46) connected for respectively receiving the data signal and the local clock signal without derivation and responsive to the transitions of said signals, and a phase lock loop having a voltage controlled local oscillator and delivering the local clock and a correction circuit having a network for forming a mean value whose output is connected to the control input of the local oscillator, the circuit responsive to the transitions being constructed so that its output passes to 1 responsive to each up-going clock edge and comes back to 0 responsive to each data transition,

characterized in that the circuit responsive to transitions comprises:
- a first set of flip-flops (32-34) one of which (32) receives the complemented data signal ($\overline{Di}$) on its clock input while the other flip-flop (34) receives the output $\overline{Q}$ of the first flip-flop (32) on its data input,
- a second set of flip-flops (36-38) one of which (38) receives the non-complemented data (Di) on its clock input while the other flip-flop (36) receives the output $\overline{Q}$ of the first flip-flop (38) on its data input, and
- a combination logic (42, 44, 48) having four OR gates each of which receives on its two inputs the corresponding outputs of the two flip-flops (32, 34 or 36, 38) of the respective set and an AND gate (48) receiving the outputs of all OR gates.

4. Device according to claim 3,

characterized in that the correction circuit has a network for generating a mean value.

5. Device according to claim 4,

characterized in that the circuit for generating the mean value has a differential amplifier (24).

6. Device according to claim 5,

characterized in that said circuit (26) comprises means (32-38) for sampling the output signal with the clock signal (H) and in that the network is connected so as to generate the mean value of $(A + O)$ - $(\overline{A} + \overline{B})$, $\overline{B}$ designating the sample of the output signal.

7. Device according to claim 3,

characterized in that the circuit responsive to the transitions comprises an additional flip-flop (50) receiving the output signal (A) of the AND gate on its data input and the local clock signal on its local input for delivering samples of said output signals on its output.

8. Device according to any one of claims 3-7,

characterized in that it further comprises a flip-flop (62) connected to receive the data signal on its data input and the local clock signal on its clock signal, delivering the output data signal.

## Patentansprüche

1. Verfahren zur asynchronen Takt-Wiedergewinnung bei einem binären digitalen Datensignal, mit den Schritten Anlegen des Signals eines spannungsgesteuerten lokalen Oszillators, der einen lokalen Taktgeber darstellt, und des Datensignals an eine Schaltung, die auf Durchgänge der Signale reagiert, und Steuern der Frequenz des Oszillators mittels einer aus dem Ausgangssignal der Schaltung gewonnenen analogen Spannung, gekennzeichnet durch die Schritte direktes und ohne Abzweigung erfolgendes Anlegen der Signale an die Schaltung, Überführen oder Halten des Ausgangssignals ($\overline{A}$) der Schaltung auf 1 bei jeder ansteigenden Flanke des Taktsignals und Überführen des Ausgangssignals auf 0 bei jedem Durchgang von Daten, wobei der Mittelwert des Ausgangssignals und des komplementären Signals einen Schätzwert für die mittlere Verzögerung der Datendurchgänge in Bezug auf die ansteigenden Flanken des vom lokalen Oszillator gelieferten Taktsignals ergeben, und gekennzeichnet durch den Schritt des Feststellens jeglichen Nichtvorhandenseins eines Durchgangs während einer Periode, die einem binären Element des Dateneingangssignals (Di) entspricht, um eine Korrekturspannung zu erzeugen, die mit dem mittleren Wert kombiniert ist.

2. Verfahren nach Anspruch 1,
   **dadurch gekennzeichnet,**
   daß die Korrekturspannung durch Abtasten des Ausgangssignals mittels des Taktsignals (H) erzeugt wird, und daß der lokale Oszillator durch den Mittelwert aus (A + O) - ($\overline{A}$ + $\overline{B}$), gesteuert wird, wobei $\overline{B}$ die Abtastung des Ausgangssignals darstellt.

3. Vorrichtung zur asynchronen Wiedergewinnung des Takts (H) bei einem binären digitalen Datensignal (Di und $\overline{Di}$) mit zwei Schaltungen (40 und 46), die derart geschaltet sind, daß sie jeweils die Datensignale und die lokalen Taktsignale ohne Abzweigung erhalten, und die auf die Durchgänge dieser Signale ansprechen, und einer Phasenverriegelungsschleife mit einem spannungsgesteuerten lokalen Oszillator (10), der das lokale Taktsignal liefert, sowie einer Korrekturschaltung, deren Ausgang mit dem Steuereingang des lokalen Oszillators verbunden ist, wobei die auf die Durchgänge ansprechende Schaltung derart gebildet ist, daß ihr Ausgang (A) bei jeder ansteigenden Flanke des Taktsignals auf 1 gesetzt wird und bei jedem Datendurchgang auf 0 zurückgesetzt wird,
   **dadurch gekennzeichnet,**
   daß die auf die Durchgänge ansprechende Schaltung
   - einen ersten Satz Kippschaltungen (32-34), deren eine (32) das komplementierte Datensignal ($\overline{Di}$) an ihrem Takteingang empfängt, während die andere Kippschaltung (34) das Ausgangssignal $\overline{Q}$ der ersten Kippschaltung (32) an ihrem Dateneingang empfängt,
   - einen zweiten Satz Kippschaltungen (36-38), deren eine (38) das nicht komplementierte Datensignal (Di) an ihrem Takteingang empfängt, während die andere Kippschaltung (36) das Ausgangssignal $\overline{Q}$ der ersten Kippschaltung (38) an ihrem Dateneingang empfängt, und
   - eine Kombinationslogik (42,44,48) mit vier ODER-Gattern, von denen jedes an seinen beiden Eingängen die entsprechenden Ausgangssignale der beiden Kippschaltungen (32,34 bzw. 36,38) des zugeordneten Satzes empfängt, und einem UND-Gatter (48), das die Ausgangssignale aller ODER-Gatter empfängt, aufweist.

4. Vorrichtung nach Anspruch 3,
   **dadurch gekennzeichnet,**
   daß die Korrekturschaltung ein Netzwerk zur Bildung von Mittelwerten aufweist.

5. Vorrichtung nach Anspruch 4,
   **dadurch gekennzeichnet,**
   daß die Schaltung zur Bildung des Mittelwertes einen Differenzverstärker (24) aufweist.

6. Vorrichtung nach Anspruch 5,
   **dadurch gekennzeichnet,**
   daß die Schaltung (26) Mittel (32-38) zum Abtasten des Ausgangssignals mittels des Taktsignals (H) aufweist, und daß das Netzwerk derart geschaltet ist, daß der Mittelwert aus (A + O) - ($\overline{A}$ + $\overline{B}$), gebildet wird, wobei $\overline{B}$ das Abtastsignal des Ausgangssignals darstellt.

7. Vorrichtung nach Anspruch 3,
   **dadurch gekennzeichnet,**
   daß die auf Durchgänge ansprechende Schaltung eine zusätzliche Kippschaltung (50) aufweist, die das Ausgangssignal (A) des UND-Gatters an ihrem Dateneingang und das lokale Taktsignal an ihrem lokalen Eingang empfängt, um am Ausgang Abtastsignale des Ausgangssignals abzugeben.

8. Vorrichtung nach einem der Ansprüche 3 bis 7,
**dadurch gekennzeichnet,**
daß sie eine Kippschaltung (62) aufweist, die zum Empfangen des Datensignals an ihrem Dateneingang und des lokalen Taktsignals an ihrem Takteingang geschaltet ist, und das Datenausgangssignal abgibt.

# FIG.1.

# FIG.4.

EP 0 237 408 B1

FIG.2.

FIG.3.

FIG.5.